Europäisches Patentamt

European Patent Office

Office européen des brevets

(11) Publication number: **0 357 284**
**A2**

## (12) EUROPEAN PATENT APPLICATION

(21) Application number: **89308254.5**

(22) Date of filing: **15.08.89**

(51) Int. Cl.⁵: **A23L 1/272 , A23L 1/31**

(30) Priority: **30.08.88 US 238361**

(43) Date of publication of application:
**07.03.90 Bulletin 90/10**

(84) Designated Contracting States:
**AT BE CH DE ES FR GB GR IT LI LU NL SE**

(71) Applicant: **OSCAR MAYER FOODS
CORPORATION**
**910, Mayer Avenue**
**Madison Wisconsin 53707(US)**

(72) Inventor: **Quickert, Stephen C.**
**4525 White Aspen Road**
**Madison Wisconsin 53704(US)**
Inventor: **Selz, Mark E.**
**1541 Ivory Drive**
**Sun Prairie Wisconsin 53590(US)**

(74) Representative: **BATCHELLOR, KIRK & EYLES**
**2 Pear Tree Court Farringdon Road**
**London EC1R 0DS(GB)**

(54) **Browning of meat products.**

㉗ A composition for imparting brown colour to particularly cook-in-bag meat products is disclosed. The composition includes water, caramel colouring, iota carrageenan and a food-grade salt. Also disclosed is a process for producing e.g. cook-in-bag meat products having an aesthetically pleasing brown colour on the surface thereof. The process includes forming a semi-rigid film, coating either the semi-rigid film or the surface of a meat product with the browning composition, placing the meat product in the semi-rigid film, covering the meat product with a flexible film, vacuum sealing the package and cooking the meat product in the vacuum sealed package. The process can produce a browned, cooked, shaped cook-in-bag meat product which is shelf stable and ready for immediate distribution to consumers.

EP 0 357 284 A2

EP 0 357 284 A2

## BROWNING OF MEAT PRODUCTS

The present invention relates to a composition and process for browning of meat products, preferably as cook-in-bag products and includes within its scope products produced by said process.

Many food products, particularly meats, are packaged in cook-in-bags, cooked and then repackaged for distribution after cooking. An example of such a process is disclosed in U.S. Patent No. 4,287,218 issued on September 1, 1981. In that patent, a ready-to-eat molded meat product is produced by placing meat in a semi-rigid mold made of a laminated film (referred to as a "forming" film), placing a laminated web (referred to as a "non-forming" film) over the top of the mold and vacuum sealing the meat within the semi-rigid mold and laminated web. Then, the vacuum-sealed product is removed from the vacuum chamber and transferred to a water bath in order to shrink the mold and film into tight engagement with the meat. The meat is then transferred into a cooking chamber where the product is cooked.

The cooking of meat products in cook-in-bags is highly desirable since it provides a simple and economic method for manufacturing a line of ready-to-eat molded meat products. However, previous methods of making such products suffer from the disadvantage that the meat product must be removed from the cook-in-bag for browning and then repackaged for distribution. The repackaging step is required since meats cooked in a cook-in-bag do not brown and thus are aesthetically unacceptable to the consumer.

Generally, cook-in-bag meat products are removed from the cook-in-bag after cooking in order to dip or rub them with a caramel color to brown the surface of the meat product. Then, the browned product is repackaged for distribution.

There are several problems with the foregoing method of making shaped meat products. First, removing the meat from the cook in-bag after cooking in order to brown the surface results in a reduced shelf life. Further, after dipping and rubbing with caramel color, the meat product must be dried for up to an hour and subsequently repackaged. It is desirable to eliminate these additional process steps in order to cut costs and production time.

Accordingly, there is a need in the art for a composition and method for producing shaped meat products by a cook-in-bag process which are browned on their surface during a conventional cook-in-bag process such that they are aesthetically acceptable to the consumer as cooked in the bag. Further, there is a need in the art for a process for making shaped meat products which does not require removal of the meat from the cook-in-bag after cooking in order to brown the meat.

## SUMMARY OF THE INVENTION

The present invention relates to a composition for imparting a brown color on a meat product. The composition includes about 50 to about 90 percent by weight of water, about 10 to about 50 percent by weight of caramel coloring, a sufficient amount of iota carrageenan to provide a viscosity to the composition sufficient to retard run-off of a surface coating of the composition, and a food-grade salt which causes thickening of said iota carrageenan in said composition in a weight ratio of from 1:10 to 10:1 with respect to the iota carrageenan.

In an other aspect, the invention relates to a method of cooking fresh meat in a closely-fitting plastic bag in which method fresh meat is placed in an open semi-rigid film, a flexible film is laid over the open portion of the semi-rigid film, a vacuum is applied to the interior of the semi-rigid film to draw the flexible film into sealing engagement with the part of the semi-rigid film defining the open portion thereof to form a closely-fitting bag and cause the meat pieces to adhere together, and cooking the molded meat while in said closely-fitting plastic bag. The improvement of the present invention provides a brown color on the exterior of the fresh meat by interposing a layer of the browning composition of the invention between the fresh meat and the surrounding plastic bag such that a substantial portion of the surface of the meat product sealed within the plastic bag is surrounded by the layer of the browning composition whereby, during the cooking step, brown color is imparted to the exterior surface of the meat product.

In a further aspect, the invention relates to a browned "cook-in-bag" meat product produced by the method of the present invention.

It is an object of the invention to provide a process and composition for browning meat products while they are being cooked in a cook-in-bag process.

It is a further object of the present invention to eliminate the need to remove meat products from a cook-in-bag after cooking in order to brown the surface of the meat.

It is a still further object of the present invention to provide a simplified method for producing shaped meat products by cooking them in a cook in-bag.

It is a still further object of the present invention to provide a method for producing shaped meat products which increases shelf life of such meat products by eliminating process steps which are prone to contaminate such meat products.

These and other objects of the present invention will be apparent to one of ordinary skill in the art from the detailed description which follows.

DETAILED DESCRIPTION OF THE PREFERRED EMBODIMENTS

The present invention relates to the production of shaped, ready-to-eat meat products for distribution and sale to the general public. A typical example of a process for producing such meat products is disclosed in U.S. Patent No. 4,287,218 issued on September 1, 1981, the disclosure of which is hereby incorporated by reference. The process relates to boneless, ready-to- eat products and is applicable to turkey, pork and beef among other meat products.

Whole pieces of meat ranging in weight from a few ounces up to at least four pounds are layered into the bottom of a preformed semi-rigid film. The whole meat pieces may be previously injection pumped with an aqueous solution and tumbled to draw the protein to the surface of the meat in order to effect adherence of the whole meat pieces together. An example of injecting of the whole meat pieces can be found in U.S. Patent No. 4,287,218.

The present invention is also applicable to ground meat as well as meat products such as turkey batter, although whole pieces of pork and beef are the most preferred meat products produced by the present invention. Generally about 1 to 15 pounds of meat are packaged in each bag.

In the process, a semi-rigid film, referred to as a "forming" film, is shaped into a cavity for the meat product. In one embodiment of the present invention, the semi-rigid film itself is coated with the browning composition prior to its being shaped for use as a cavity for the meat product. However, in a preferred embodiment, the semi-rigid film is first formed into a cavity for the meat and the formed surface which will contact the meat product is then coated with the browning composition of the present invention. The coating weight of the browning composition should be approximately 0.05 to about 0.5 grams of coating per square inch of film coated preferably about 0.1 to 0.2 grams per square inch and more preferably about 0.12 to 0.16 grams per square inch. A coating weight falling within this range produces best results, but other, less preferable coating weights can also be employed. The coating is applied to at least a substantial portion of the surface of the package (or the meat in the package) preferably at least 60% thereof. It has been found that it is usually sufficient to apply less than a complete coating over the entire surface because the browning composition tends to spread over the entire surface during cooking.

The meat is then placed into the coated film and a flexible film layer (the "non forming" film) is placed over the open portion of the semi-rigid film on top of the meat to form a bag around the meat.

The wrapped meat product is then transferred to a vacuum chamber whereupon a vacuum is applied to evacuate 50 to 100 percent of the air within the bag and to cause the flexible film to be drawn into sealing engagement with the upper edges of the semi-rigid film. This produces a meat product sealed in a closely-fitting plastic bag. The application of the vacuum additionally eliminates air holes, jelly pockets and voids between the meat pieces and effects increased cohesion of the meat pieces.

The vacuum sealed product is next removed from the vacuum chamber and may be transferred to a water bath having a temperature of e.g., 150° F to 200° F in order to effect shrinking of the semi-rigid film and the flexible film into tight engagement with the meat to thereby hold the molded product shape. The meat is next transferred into a cooking chamber where the product is cooked to a suitable temperature for the particular meat product.

After cooking is completed, the cooked product is cooled and may be placed in a carton for storage at an appropriate temperature prior to shipping for sale.

In another embodiment, rather than coating the film with the browning composition, the meat product itself can be coated with the browning composition prior to its placement inside the semi-rigid film. However, this is a less-preferred method since the browning composition has a tendency to penetrate into gaps in the meat product and thereby cause browning within the meat product as well as on the surface of the meat product. Browning within the meat product is aesthetically undesirable and thus is to be avoided. Accordingly, it is less desirable to coat the browning composition directly on the meat prior to filling the meat into the semi-rigid film unless the meat product is a single, large piece of meat or is substantially void-free such that the browning composition is unable to penetrate beyond the surface of the meat product.

The browning composition may be coated onto the forming film or the meat product by any suitable method. Suitable methods include spraying the composition onto the surface, manually wiping the composition on the surface, brushing the composition on the surface or immersing the meat product or forming film in the browning composition. Any other suitable method may also be employed for coating the composition onto either the forming film surface or the meat product surface so long as a layer of the composition is interposed between the meat and the surrounding plastic bag such that at least a substantial portion of the surface of the meat product sealed within the plastic bag is covered by the layer. The most preferred means for applying the browning composition is by air-atomized spraying using a two-fluid nozzle system to spray the solution uniformly into the formed, semi-rigid film or onto the meat surface.

The semi-rigid forming film used in the present invention is any one of the known cook-in-bag semi-rigid films and may be, for example, a 7 mil nylon/saran/polylaminated film or a multivac surlyn film which has been treated by corona discharge. Other suitable films may be employed so long as they may be used as a semi-rigid mold for shaping the meat product and are both air and water impermeable.

The flexible non-forming film may be any suitable cook-in-bag type flexible film known in the art. For example, a 2.6 mil laminated nylon/saran/poly film may be employed as the non-forming film. Other suitable films may also be employed so long as they are capable of shrinking into tight engagement with the meat product and are both air and water impermeable.

Both the semi-rigid and the flexible films are required to be air and water impermeable since they will function as the final package for the meat product. Accordingly, they must be capable of providing a tight seal around the meat product to prevent spoilage of the product. The package must be shelf stable. Any conventional system for cook-in-bag sealing may be employed to seal the forming and non-forming films.

The browning composition of the present invention comprises water, caramel color, iota carrageenan and a food-grade salt. The browning composition may also optionally include a food grade surfactant and any other flavors or colorants which may be desirable for specialized applications.

The browning composition of the present invention preferably includes from about 50 to about 90 weight percent of water and more preferably from about 60 to about 80 weight percent water, based on the composition weight. The water functions as a solvent for the browning composition such that it can be applied in liquid form by spraying, brushing, etc.

The caramel coloring is a known coloring composition and is described in detail in U.S. Patent No. 3,860,728 issued on January 14, 1975, the disclosure of which is hereby incorporated by reference. The browning composition of the present invention preferably includes from about 10 to about 50 weight percent of caramel coloring and more preferably from about 20 to about 40 weight percent of caramel coloring based on the weight of the composition. The caramel coloring imparts a brown color to the surface of the meat product.

The browning composition of the present invention also includes a sufficient amount of iota carrageenan to produce a composition viscosity which retards run-off of the composition from a surface. Preferably, the carrageenan content is such that the composition will cling for at least a minute or so to a plastic cook-in-bag forming film when the film is oriented vertically. The salt component of the composition causes the carrageenan to thicken by gelling. Accordingly, when reference is made herein to an amount of carrageenan to impart a viscosity, it is intended to include the thickening effect of the salt. Preferably, the browning composition includes from about 0.2 percent to about 1 percent by weight of iota carrageenan and more preferably from about 0.3 to about 0.6 percent by weight of iota carrageenan.

It is important to employ iota carrageenan in the present invention since other thickening agents including other forms of carrageenan, xanthan gum and gum arabic do not produce an acceptable product. Iota carrageenan, on the other hand, is useful in the present invention since it thickens the composition without producing a brittle gel. Further, iota carrageenan is cold soluble in water and thus heat is not required to dissolve the iota carrageenan in the browning solution.

Finally, the browning composition of the present invention also includes a food-grade salt which causes the iota carrageenan to gel and thicken in the composition in a weight ratio from about 1:10 to about 10:1 with respect to the iota carrageenan. More preferably, the food-grade salt is present in a weight ratio of from about 1:4 to about 4:1 of the iota carrageenan, and most preferably, the food-grade salt is present in a weight ratio of 1:2 to 2:1 with respect to the iota carrageenan. Suitable salts include, for example, sodium chloride and potassium chloride. The salt acts in combination with the iota carrageenan to gel the carrageenan and thereby provide thickening of the composition.

The browning composition may also include optional ingredients such as a food-grade wetting agent or surfactant and other flavors and/or colorants as desired. The most preferred browning composition includes an optional wetting agent in an amount of from about 0.1 to about 1 percent by weight and more preferably

4

from about 0.15 to about 0.45 percent by weight. Optional wetting agents include the generally known surfactants and non-ionic surfactants are most preferred. An example of a suitable wetting agent is polysorbate 80. The wetting agent functions to help wet the packaging or meat surface with the browning composition. Also, the wetting agent helps to keep a layer of browning composition between the meat and the package. Finally, the wetting agent contributes to the uniformity of the layer of browning composition.

Optional flavorings and colorings may also be added to the browning composition for specific applications as desired. For example, colorings such as liquid smoke and annato may be employed in the browning composition to impart additional or different coloring or flavoring to the composition.

The shaped meat product produced by the process of the present invention and colored with the composition of the present invention is shelf stable in its original cook-in-bag. Further, when distributed to the ultimate consumer the meat product will be brown in color and, thus, aesthetically pleasing. Also, when the package is opened by the consumer, the color is on the meat surface and does not adhere to the cook-in-bag.

The present invention provides several distinct advantages over prior art methods for making shaped meat products and over prior art shaped meat products. First, the present invention makes it possible to produce a shaped meat product which is colored in its original cook-in-bag in a simple and economic fashion. This is important since generally meat does not brown when cooked in this manner and a subsequent browning step is usually necessary to produce an aesthetically acceptable brown meat product.

Another major advantage of the present invention is that it eliminates subsequent process steps needed to brown shaped meat products which are cooked in a bag. Usually, the cooking-bag must be removed from the cooked meat product, the meat product dipped in a browning solution, and then the meat product must be dried for a period of up to an hour and then repackaged for storage and distribution. The present invention eliminates the need to unpack and repack the meat product since it is browned inside the cook-in-bag. Thus, the dipping and drying steps are also unnecessary and a savings in labor and time are the result particularly with respect to the prior art drying step which can take up to an hour.

The following example is included to illustrate an embodiment of the present invention.


### EXAMPLE 1


A coating composition including the following ingredients is employed for this example.

| Ingredient | Weight Percent |
|---|---|
| Water | 68.85 |
| Caramel Coloring | 30.00 |
| Iota Carrageenan | 0.45 |
| Sodium Chloride | 0.45 |
| Polysorbate 80 | 0.25 |

A semi rigid film of a surlyn is formed. The inside of the surlyn film is coated with a layer of the foregoing browning composition in an amount of 0.12 to 0.16 grams per square inch of the film. Whole muscle chunks of meat are added into the coated film and a flexible film is placed over the top of the meat. The bag is then evacuated to form a tight seal about the meat product and the meat is cooked. The product is then cooled and is in a form ready for distribution. The resultant product has an even, aesthetically pleasing, brown coloring over the entire surface of the meat. Further, when the package is removed, the coating adheres to the surface of the meat product and not to the film.

The foregoing description of embodiments of the invention has been presented for purposes of illustration and description. It is not intended to be exhaustive or to limit the invention to the precise forms disclosed, and many modifications and variations will be obvious to one of ordinary skill in the art in light of the above teachings. The scope of the invention is to be defined by the claims appended hereto.


**Claims**

EP 0 357 284 A2

1. A composition for imparting a brown colour on the surface of a meat product comprising:
water in an amount of about 50 to about 90 percent by weight;
caramel colouring in an amount of about 10 to about 50 percent by weight;
iota carrageenan in an amount sufficient to retard run-off of a surface coating of the composition; and
a food-grade salt which causes thickening of said iota carrageenan in said composition in a weight ratio of about 1:10 to about 10:1 with respect to the iota carrageenan.

2. A composition as claimed in Claim 1, further comprising a food-grade wetting agent in an amount sufficient to improve the flow characteristics of the composition, said wetting agent optionally comprising a non-ionic surfactant.

3. A composition as claimed in Claim 1 or 2, further comprising at least one flavouring agent and/or at least one food grade colouring agent other than caramel colouring.

4. A composition as claimed in any preceding claim, wherein said iota carrageenan is present in an amount of about 0.2 to about 1 percent by weight of the composition, and/or said wetting agent is present in an amount of about 0.1 to about 1 percent by weight of the composition.

5. A composition as claimed in any preceding claim, comprising:
water in an amount of about 60 to about 80 percent by weight;
caramel colouring in an amount of about 20 to about 40 percent by weight;
iota carrageenan in an amount of about 0.3 to about 0.6 percent by weight; and wetting agent in an amount of about 0.15 to about 0.45 percent by weight.

6. A composition as claimed in any preceding claim and preferably as claimed in Claim 5, wherein said salt is present in a weight ratio of about 1:4 to about 4:1 with respect to said iota carrageenan.

7. A composition as claimed in any preceding claim, wherein said salt comprises sodium chloride and/or calcium chloride.

8. A method of cooking fresh meat in a closely-fitting plastic bag in which method fresh meat is placed in an open semi-rigid plastic film, a flexible film is laid over the open portion of the semi-rigid film, and a vacuum is applied to draw the flexible film into sealing engagement with the semi-rigid film to form a closely-fitting plastic bag and wherein the meat is cooked in the closely-fitting plastic bag, a brown colour being provided on the exterior of the fresh meat by interposing a layer of a composition between the fresh meat and the surrounding plastic bag such that at least a substantial portion of the surface of the meat product sealed within said plastic bag is covered by said layer, said composition comprising water in an amount of about 50 to about 90 percent by weight, caramel colour in an amount of about 10 to about 50 percent by weight, iota carrageenan in an amount sufficient to provide a viscosity to the composition which retards run-off of a surface coating of the composition, and a food-grade salt which causes thickening of said iota carrageenan in said composition in a weight ratio of about 1:10 to about 10:1 with respect to said iota carrageenan; whereby during the cooking of said meat in said bag, a brown colour is imparted to the exterior surface of said meat product.

9. A method as claimed in Claim 8 wherein interposing said layer is effected by coating said composition on the exterior surface of said fresh meat product before sealing said fresh meat product in said plastic bag.

10. A method as claimed in Claim 8 wherein interposing said layer is effected by coating said composition on the surface of said plastic bag before sealing said fresh meat product in said plastic bag.

11. A method as claimed in any one of Claims 8 to 10, wherein said fresh meat comprises pork and/or beef.

12. A packaged cooked meat product having a brown surface colour made by a method as claimed in any one of Claims 8 to 11.

6